# EUROPÄISCHE PATENTSCHRIFT

(11) **EP 0 465 491 B1**
(45) Veröffentlichungstag und Bekanntmachung des Hinweises auf die Patenterteilung: **04.08.1993**
(21) Anmeldenummer: 90904771.4
(22) Anmeldetag: 30.03.1990
(51) Int. Cl.: B60H 1/00

(54) **VERFAHREN ZUR FRISCHLUFTSTEUERUNG IN DER MITTELEBENE EINES KRAFTFAHRZEUGES UND EINRICHTUNG ZUR DURCHFÜHRUNG DES VERFAHRENS**
PROCESS AND DEVICE FOR CONTROLLING THE FRESH AIR IN THE MEDIAN PLANE OF A MOTOR VEHICLE
PROCEDE ET DISPOSITIF POUR REGULER L'AIR FRAIS DANS LE PLAN MEDIAN D'UN VEHICULE A MOTEUR

(30) Priorität: 31.03.1989 DE 3910489
(43) Veröffentlichungstag der Anmeldung: 15.01.1992
(73) Patentinhaber: SIEMENS AKTIENGESELLSCHAFT, 80333 München (DE)
(72) Erfinder: HILDEBRAND, Reinhard, D-8627 Redwitz (DE); SCHRAMM, Michael, D-8632 Neustadt/Coburg (DE)
(86) Internationale Anmeldenummer: DE9000258
(87) Internationale Veröffentlichungsnummer: WO9011904

(56) Entgegenhaltungen:
- EP-A- 0 102 611
- EP-A- 0 267 101
- EP-A- 0 337 382
- DE-C- 338 768
- US-A- 4 681 153
- PATENT ABSTRACTS OF JAPAN, vol. 13, no. 22 (M-786)(3370), 19 January 1989
- PATENT ABSTRACTS OF JAPAN, vol. 12, no. 208 (M-709)(3055), 15 June 1988
- PATENT ABSTRACTS OF JAPAN, vol. 6, no. 1 (M-105)(879), 7 January 1982

## Beschreibung

Verfahren zur Frischluftsteuerung in der Mittelebene eines Kraftfahrzeuges und Einrichtung zur Durchführung des Verfahrens

Die Erfindung bezieht sich auf ein Verfahren zur Frischluftsteuerung in der Mittelebene eines Kraftfahrzeuges und Einrichtung zur Durchführung des Verfahrens gemäß Oberbegriff des Anspruchs 1 bzw. des Anspruchs 2 ; ein derartiges Verfahren und eine derartige Einrichtung sind durch eine offenkundige Vorbenutzung bekannt.

Bei diesem bekannten Verfahren wird durch einen Drehknopf in der zentralen Bedieneinheit die von einem Ventilator geförderte Luft je nach Stellung des Drehknopfes in der Einstellung "Mittelebene" als untemperierte Frischluft durch einen Frischluftkanal zu einer oder mehreren Düsen in der Mittelebene geleitet, in der Stellung "Defroster" über einen Defroster-Luftkanal mit nach Einstellung des Temperaturwählers in der Bedieneinheit als mehr oder weniger in einem Wärmetauscher temperierte Luft zu den Scheiben und in der Einstellung "Fußraum" durch einen Fußraumkanal je nach Einstellung des Temperaturreglers als wiederum mehr oder weniger in dem Wärmetauscher temperierte Warmluft in den Bodenraum des Kraftfahrzeuges geleitet. Zur Einstellung der verschiedenen Luftströmungen werden in Abhängigkeit von dem Drehknopf Klappen in den einzelnen, zuvor gekennzeichneten Luftkanälen zwischen einer vollen Öffnungsstellung und einer vollen Schließstellung bewegt. Durch einen Luftmengenregler in der Bedieneinheit kann zusätzlich jeweils eingangsseitig im Ansaugkanal der Volumenstrom generell eingestellt werden.

Bei einer durch die US-A 4 681 153 bekannten, luftseitig nach Vorgabe eines Temperaturstellers steuer- bzw. regelbaren Kfz-Belüftungsanlage ist am Lufteintritt eines Wärmetauschers und eines die Mittelebene versorgenden Frischluftkanals eine Mischluftklappe vorgesehen, die mit Zwischenstellungen zwischen einer Schließstellung mit keinem Luftzutritt zum Wärmetauscher und vollem Frischluftzutritt zur Mittelebene und einer Öffnungsstellung mit keinem Frischluftzutritt zur Mittelebene und vollem Luftzutritt zum Wärmetauscher verschwenkbar ist; in einem von der Ausgangsseite des Wärmetauschers zur Mittelebene verlaufenden Parallel-Warmluftkanal ist eine sich selbsttätig druckabhängig von der Differenz an Vorderseite bzw. Rückseite einstellende Absperrklappe angeordnet, die bei kleinem Öffnungswinkel der Mischluftklappe geschlossen bleibt, so daß der Warmluftanteil aus dem Wärmetauscher nur dem Fußraum beigemischt wird, und die sich bei größerem Öffnungswinkel der Mischluftklappe öffnet, so daß ein geringerer Warmluftanteil auch dem zur Mittelebene führenden Frischluftkanal beigemischt wird.

Um insbesondere bei kalten Außentemperaturen nicht einen unerwünschten Frischluftstrom durch die Düsen der Mittelebene ausgesetzt zu sein, ist bei den bekannten Anlagen der vorgenannten Art noch eine besondere Bedienvorrichtung vorgesehen, mit der die Frischluftdüsenöffnung mehr oder weniger stark geschlossen werden kann.

Darüber hinaus ist es durch die DE-A-33 38 768 bekannt, bei sehr kalten Außentemperaturen durch automatische Beimischung von temperierter Luft zu der durch die Luftauslaßdüse einströmenden kalten Außenluft eine komfortablere Kopfraumtemperatur zu erzielen, die kühler ist als die zu den Defroster- bzw. Fußraumdüsen bei sonst gleichen Bedingungen geförderte Luft; dies wird im bekannten Fall bei einer durch Luftklappen hinter dem Wärmetauscher geregelten Temperierung durch einen zum Frischluftkanal parallel laufenden Warmlust-Bypasskanal und einer von einer gesonderten Bedienvorrichtung betätigten Abschlußklappe erreicht, die gleichzeitig sowohl den Frischluftkanal als auch den Bypasskanal mit der temperierten Luft verschließt bzw. öffnet. Unabhängig davon ist ein Luftverteilungseinstellelement ähnlich der bei der eingangs erläuterten offenkundig vorbenutzten Frischluftsteuerung vorgesehen.

Gemäß Aufgabe vorliegender Erfindung soll mit technisch einfachen und einbaumäßig kompakten Mitteln bei einfacher Bedienung ein erhöhter Lüftungskomfort, insbesondere bei sehr niedrigen Außenlufttemperaturen, erreicht werden.

Die Lösung dieser Aufgabe gelingt bei einer Frischluftsteuerung der eingangs genannten Art durch das erfindungsgemäße Verfahren gemäß Anspruch 1 bzw. Anspruch 2 und durch die konstruktiv einfache und kleinbauende Einrichtung zur Durchführung des Verfahrens. Vorteilhafte Ausgestaltungen der Erfindung sind jeweils Gegenstand der Unteransprüche.

Das erfindungsgemäße Verfahren erlaubt ohne zusätzliche Bedienelemente am Armaturenbrett unter Benutzung des schon vorhandenen Luftverteileinstellelementes an der zentralen Bedieneinheit und ohne zusätzliche, den engen Einbauraum hinter dem Armaturenbrett beaufschlagende Übertragungsmittel zum Heiz- und Klimaaggregat in komfortabler Weise dem aus den Düsen der Mittelebene austretenden Frischluftstrom weitgehend individuell gezielt temperierte Luft beizumischen. Je nach Stellung des Luftverteileinstellelementes der zentralen Bedieneinheit kann nicht nur die allgemeine Luftverteilung im Fahrzeug eingestellt, sondern auch der zur Mittelebene geförderten Frischluft mehr oder weniger Warmluft zugemischt werden, wobei der zugemischte Warmluftanteil nicht zwingend von der Außenlufttemperatur abhängig, sondern in vorteilhafter Weise mit der Wahl der Luftverteilung gekoppelt ist.

Dieses Verfahren ist in konstruktiv einfacher Weise bei einer Luftverteilungseinstellung über eine von dem Luftverteileinstellelement im Heiz- und Klimagerät verstellbaren Kulissenscheibe mit von dieser über Übertragungshebel betätigten Luftklappen in einem Frischluft-Luftkanal, einem Defroster-Luftkanal und einem Fußraum-Luftkanal dadurch möglich, daß lediglich zum Frischluft-Luftkanal ein zusätzlicher, über eine Zusatz-Luftklappe regulierbarer Warmluft-Zusatzkanal vorgesehen und entweder unmittelbar von dem zur Betätigung der Luftklappe in dem Frischluft-Luftkanal bereits vorgesehenen Anlenkhebel auch die Betätigung der Zusatz-Luftklappe in dem Warmluft-Zusatzkanal angekoppelt ist oder mittelbar eine Ankopplung zwischen dem Anlenkhebel und der Zusatz-Luftklappe über die Kulissenscheibe erfolgt.

Nach einer Ausgestaltung des erfindungsgemäßen Verfahrens ist vorgesehen, daß in der Einstellung (Bilevel-Stellung) mittig zwischen der Einstellung "Mittelebene" einerseits und der Einstellung "Defroster" bzw. "Fußraum" andererseits die erste Luftklappe und die Zusatz-Luftklappe in halber Öffnungsstellung sind. Die Ankopplung der Zusatz-Luftklappe an die erste Luftklappe kann in vorteilhafter Weise je nach Kundenwunsch durch einfache Ankopplungsvariation linear oder aber auch mit progressiver bzw. degressiver Übersetzung in einem bestimmten Bereich zwischen der Einstellung "Mittelebene" und der Einstellung "Defroster" bzw. "Fußraum" erfolgen.

Eine noch weitere Komfortsteigerung ist dadurch möglich, daß durch mittelbare Kopplung zwischen dem Antrieb der ersten Luftklappe einerseits und der Zusatz-Luftklappe andererseits insbesondere über eine Kulissenscheibe mit jeweils spezifischem Kulissenbahnverlauf in etwa mittlerer Öffnungs- bzw. Schließstellung der ersten Luftklappe trotz deren weiterer Öffnungs- bzw. Schließbewegung durch eine Zwischen-Verweilstellung der Zusatz-Luftklappe der Frischluft zur Mittelebene ein im wesentlichen unverändert hoher Warmluftanteil beimischbar ist.

Zweckmäßigerweise ist eine derartige Auslegung, z.B. der Querschnitte des Frischluftkanals relativ zum Warmluft-Bypasskanal bzw. der mehr oder weniger starken linearen Ankopplung der Zusatz-Luftklappe zur ersten Luftklappe vorgesehen, daß der aus der Frischluftdüse austretende Luftstrom eine niedrigere Temperatur als der aus einem den Fußraum versorgenden Luftkanal Luftstrom jedoch eine höhere Temperatur als in der Einstellung "Mittelebene" des Luftverteileinstellelementes aufweist, wobei vorzugsweise in der Zwischenstellung zwischen der Stellung "Mittelebene" und der Stellung "Defroster" bzw. "Fußraum" ein gegenüber der reinen Stellung "Mittelebene" verringerter Volumenstrom aus der Frischluftdüse austritt. Eine weitere Komfortsteigerung ist durch einen gegenüber der Bilevel-Stellung bei steigender Temperatur weiter sich verringernden Volumenstrom aus der Frischluftdüse bei Verstellen des Luftverteileinstellelementes bei zunehmender Verstellung in Richtung von der Bilevel-Stellung in Richtung der Einstellung "Defroster" bzw. "Fußraum" gekennzeichnet.

Die Erfindung sowie weitere vorteilhafte Ausgestaltungen der Erfindung werden im folgenden anhand eines schematisch dargestellten Ausführungsbeispiels in der Zeichnung näher erläutert; darin zeigen:
- FIG 1: eine Frontansicht einer zentralen Kfz-Bedieneinheit,
- FIG 2: in einem Schnittbild das Gehäuse einer Heiz- und Klimaeinrichtung mit über eine zentrale Kulissenscheibe und darin geführten Hebeln bedienbaren Luftklappen in den einzelnen Luftkanälen bei unmittelbarer Kopplung der Anlenkhebel von erster Luftklappe und Zusatz-Luftklappe,
- FIG 3: das Bewegungsdiagramm der vier von dem zentralen Lufteinstellelement der Bedieneinheit betätigbaren Luftklappen bei einer Klappensteuerung, z.B. gemäß Figur 2,
- FIG 4: in einem Schnittbild das Gehäuse einer Heiz- und Klimaeinrichtung mit über eine zentrale Kulissenscheibe und darin geführten Hebeln bedienbaren Luftklappen in den einzelnen Luftkanälen bei mittelbarer Kopplung der Anlenkhebel von erster Luftklappe und Zusatz-Luftklappe,
- FIG 5: das Bewegungsdiagramm der vier von dem zentralen Lufteinstellelement der Bedieneinheit betätigbaren Luftklappen bei einer Klappensteuerung, z.B. gemäß Figur 4,

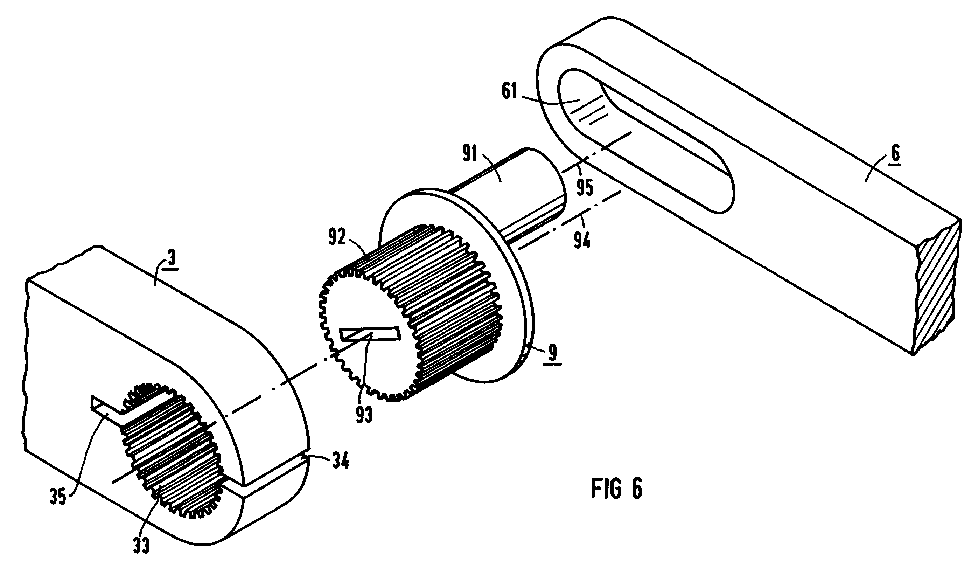

- FIG 6: in einer perspektivischen Explosionsdarstellung ein Excenter-Justierelement zwischen zwei über eine Drehgelenkverbindung angekoppelten Hebeln der Luftklappen-Betätigungseinrichtung gemäß FIG 2.

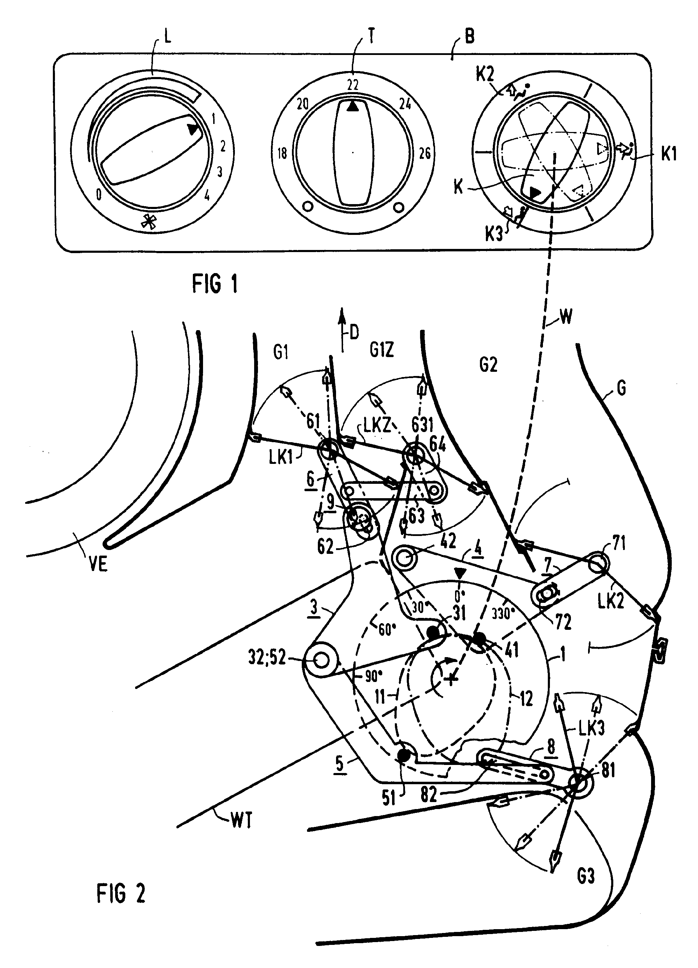

FIG 1 zeigt eine in der Mittelebene eines Kraftfahrzeuges angebrachte zentrale Bedieneinheit B mit einem Gebläseschalter L mit Luftmengensteuerung, über den z.B. die Drehzahlstufen eines zentralen Ventilators VE am Eingang der Heiz- und Klimaeinrichtung einstellbar sind, mit einem Temperatureinstellregler T, wobei die Temperaturregelung vorzugsweise wasserseitig in einem Wärmetauscher WT erfolgt, der zwischen dem Ausgang des zentralen Ventilators VE und dem Eingang der verschiedenen Luftkanäle angeordnet ist und mit einem Luftverteileinstellelement in Form eines Drehknopfes K mit drei, mit entsprechenden Symbolen markierten Einstellungen "Mittelebene" K1, "Defroster" K2 und "Fußraum" K3. Zwischen den Stellungen "Mittelebene" K1 einerseits und "Defroster" K2 bzw. "Fußraum" K3 sind Zwischenstellungen möglich.

Von dem Drehknopf K wird in hier nur angedeuteter Weise über eine biegsame Welle W eine Kulissenscheibe 1 an der Wandung der Gehäuses G der Heiz- und Klimaeinrichtung linear im Verhältnis 1:1 derart angetrieben, daß bei einer vollen Drehung des Drehknopfes K die Kulissenscheibe 1 im gleichen Maße in der mit einem Pfeil auf der Kulissenscheibe 1 angedeuteten Drehrichtung gedreht wird. Durch Drehung der Kulissenscheibe 1 werden über von dieser geführte Kulissenhebel 3,4,5 und mit den Kulissenhebeln 3,4,5 gekoppelte Anlenkhebel 6,7,8 Luftkappen LK1, LKZ, LK2 und LK3 über einen in FIG 2 jeweils angedeuteten Drehwinkelbereich von ca. 60° für die zweite und dritte Luftklappe (LK2 bzw.LK3) und von ca. 75° für die erste Luftkappe (LK1) und die Zusatz-Luftklappe (LKZ) betätigt.

In einzelnen ist dazu in einem Frischluft-Luftkanal G1 eine erste Luftklappe LK1 um einen Drehzapfen 61, in einem Defroster-Luftkanal G2 eine zweite Luftklappe LK2 um einen Drehzapfen 71 und in einem Fußraum-Luftkanal G3 eine dritte Luftklappe LK3 um einen Drehzapfen 81 drehbar gelagert. Zur gezielten Betätigung mit gegenseitiger Stellungsabhängigkeit je nach Einstellung des Drehknopfes K ist auf der Vorderseite der Kulissenscheibe 1 eine Kulissenbahn 11 mit darin geführten Führungszapfen 31 und 51 und auf der Rückseite der Kulissenscheibe 1 eine Kulissenbahn 12 mit darin geführtem Führungszapfen 41 vorgesehen. Der Führungszapfen 31 ist gehalten in einem Kulissenhebel 3 zur Betätigung der ersten Luftklappe LK1, der Führungszapfen 51 ist gehalten in einem Kulissenhebel 5 zur Betätigung der dritten Luftklappe LK3; beide Kulissenhebel 3 bzw.5 sind dabei um einen gemeinsamen ortsfesten Lagerzapfen 32 bzw.52 schwenkbar. Die Kulissenhebel 3,4,5 greifen an ihren luftklappenseitigen Enden mit Zapfen jeweils in Langlochführungen 62,72,82 von jeweiligen Anlenkhebeln 6,7,8 ein, die in den Drehachsen 61,71,81 mit den Luftklappen LK1,LK2,LK3 kraft- und/oder formschlüssig verbunden sind.

An den die erste Luftklappe LK1 betätigenden ersten Anlenkhebel 6 ist über zwei Zusatz-Anlenkhebel 63,64 eine Zusatz-Luftklappe LKZ in einen Warmluft-Zusatzkanal G1Z zum Frischluftkanal G1 derart angekoppelt, daß sie je nach Art der Ankopplung linear, progressiv oder degressiv mit der Betätigung des ersten Anlenkhebels 6 zur Betätigung der Frischluftklappe LK1 in einfacher Weise mitbewegt werden kann. Ausströmseitig münden der Frischluftkanal G1 und der Warmluft-Zusatzkanal G1Z in einen gemeinsamen Luftkanal, der zu einer Frischluftdüse D in der Mittelebene des Armaturenbretts führt. Anstelle einer einzigen Frischluftdüse D können auch zusätzlich Seitendüsen vorgesehen sein, so daß über die gesamte Mittelebene gegebenenfalls eine temperierte Frischluftverteilung durch Einstellung des einzigen Drehknopfes K im Einstellbereich zwischen der Einstellung K1 und K2 bzw.K1 und K3 erfolgen kann.

FIG 2 zeigt mit ausgezogener Strichkontur die augenblickliche Klappenanordnung entsprechend der Einstellung des Drehknopfes K in der Einstellung K3, in der ausschließlich eine gegebenenfalls über den temperaturgesteuerten Wärmetauscher WT je nach Stellung des Temperatureinstellreglers T erwärmte Luft in den Fußraum eintritt; dementsprechend ist die Luftraumklappe LK3 in voller Öffnungsstellung, während die Luftraumklappen LK1,LKZ und LK2 voll geschlossen sind. Mit jeweils strichpunktierter Strichkontur sind Drehknopf und Luftklappen in Stellung K1 bzw. Bilevel dargestellt.

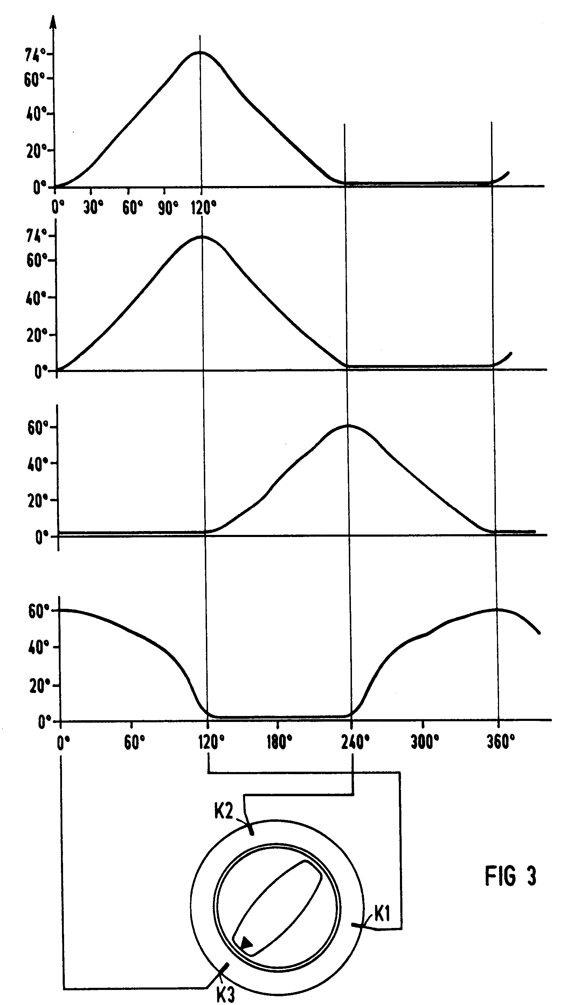

Die gegenseitige Öffnungs- und Schließbewegungen der Luftklappen in Abhängigkeit von der jeweiligen Stellung des Drehknopfes K in der zentralen Bedieneinheit B und damit der Kulissenscheibe 1 sind aus dem Bewegungsdiagramm gemäß FIG 3 entnehmbar. Dieses Bewegungsdiagramm zeigt über die volle Umdrehung 0 - 360° der Kulissenscheibe 1 jeweils sich einstellende Luftklappenöffnungswinkel bei der in FIG 2 an der Kulissenscheibe 1 eingezeichneten Drehrichtung und ausgehend von der in FIG 1,2 angedeuteten Null-Stellung des Drehknopfes K und der Kulissenscheibe 1. Wie zusätzlich in FIG 3 anhand des skizzierten Drehknopfes K nochmals angedeutet, entspricht der Einstellung 120° der Kulissenscheibe 1 die Einstellung "Mittelebene" des Drehknopfes K und der Winkeleinstellung 240° der Kulissenscheibe 1 die Einstellung "Defroster" der Kulissenscheibe 1.

Wie insbesondere aus FIG 2 ersichtlich, ist in vorteilhafter Weise eine durch die Zusatz-Luftklappe (LKZ) in deren Stellung "Defroster" (K2) bzw. "Fußraum" (K3) versperrbare Zusatzöffnung des Warmluftzusatzkanals (G1Z) zum Frischluftzutritt vorgesehen, derart daß in der Einstellung "Mittelebene" die Frischluft sowohl durch den Frischluft-Luftkanal G1 als auch durch den wärmetauscherseitig durch die Zusatz-Luftklappe LKZ abgeschlossenen Warmluft-Zusatzkanal G1Z in die Mittelebene strömt. Bei hohen Außentemperaturen strömt also ein maximaler untemperierter Frischluft-Volumenstrom in die Mittelebene; beim weiteren Verstellen des Drehknopfes K öffnet sich dann die Zusatzklappe und bei vermindertem Volumenstrom kann der Frischluft ein temperierter Warmluftanteil durch das einzige zentrale Luftverteileinstellelement mehr oder weniger beigemischt werden.

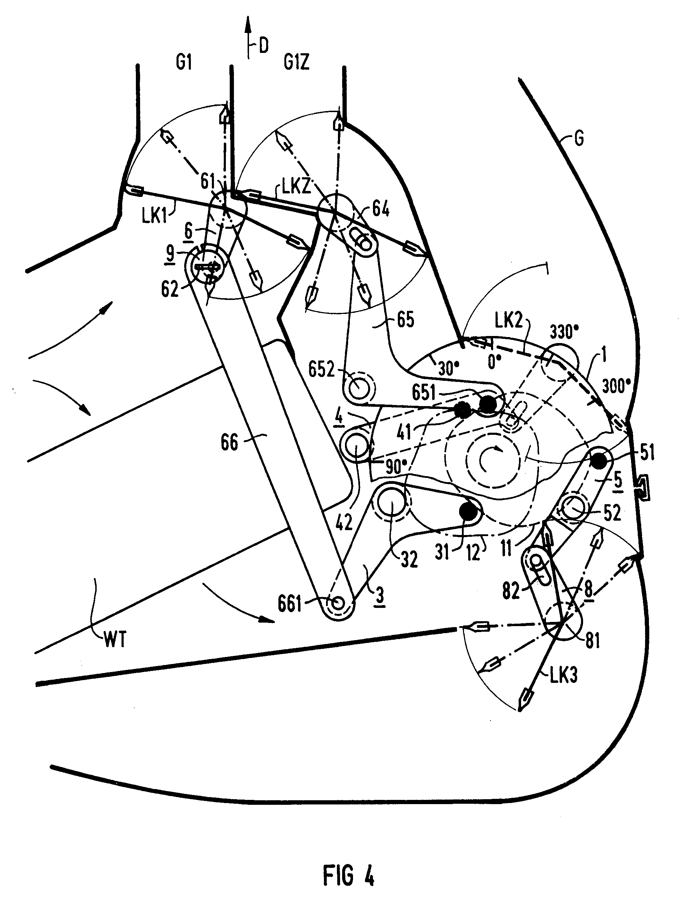

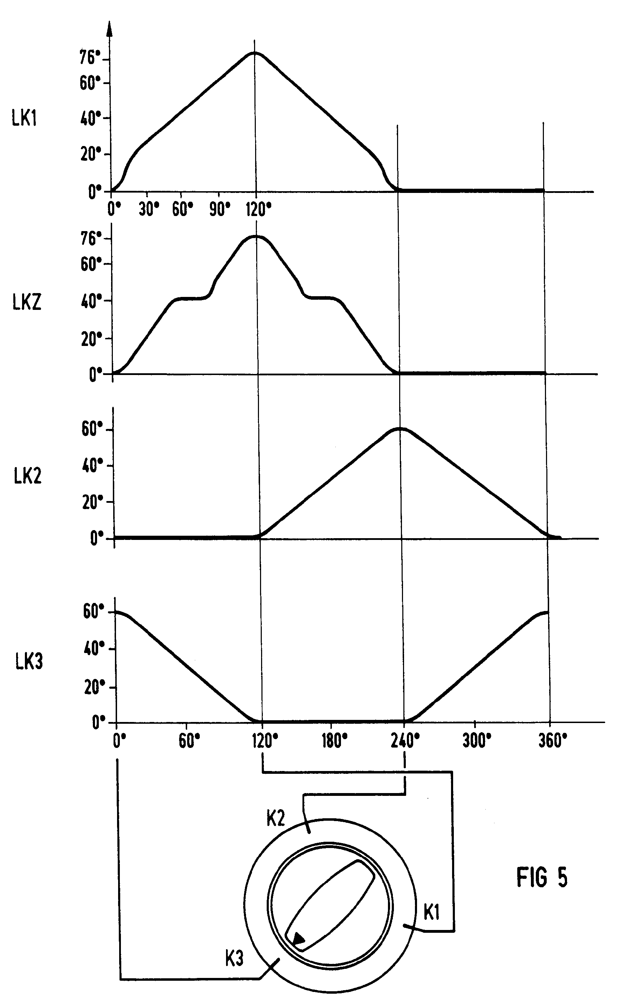

FIG 4 zeigt bei durch eine feste Wand versperrtem Frischluftzutritt zu dem Warmluft-Zusatzkanal jedoch ansonsten im wesentlichen gleichem Aufbau wie FIG 2 eine mittelbare Kopplung zwischen der ersten Luftklappe LK1 und der Zusatz-Luftklappe LKZ über die Kulissenscheibe 1. Dazu ist in einer Kulissenbahn 11 auf der Rückseite der Kulissenscheibe 1 neben dem Kulissenhebel 4 für die zweite Luftklappe LK2 und dem Kulissenhebel 5 für die dritte Luftklappe LK3 der Kulissenhebel 3 mit seinem Führungszapfen 31 geführt, um den ortsfesten Lagerzapfen 32 verschwenkbar und über eine Koppelstange 66 mit dem Anlenkhebel 6 für die erste Luftklappe LK1 verbunden, während der um die Drehachse 641 drehbare Anlenkhebel 64 der Zusatz-Luftklappe LKZ über eine Langlochführung 642 in Mitnahmeverbindung mit einem Kulissenhebel 65 steht, der um eine ortsfeste Drehachse 652 verschwenkbar ist und mit einem Führungszapfen 651 an seinem der Langlochführung abgewandten Ende von einer Kulissenbahn 12 auf der Vorderseite der Kulissenscheibe 1 derart geführt wird, daß - wie insbesondere aus einem Vergleich der beiden Luftklappen zugeordneten Bewegungsdiagrammen gemäß FIG 5 entnehmbar - die Zusatz-Luftklappe LKZ in etwa mittlerer Öffnungs- bzw. Schließstellung (ca. 40° Öffnungsstellung) in einer Zwischen-Verweilstellung bleibt und somit trotz weiter öffnender bzw. weiter schließender erster Luftklappe LK1 ein unverändert relativ hoher Warmluftanteil der Mittelebene beimisehbar ist und somit für einen bestimmten Bereich die Bewegung der Zusatz-Luftklappe LKZ im Sinne einer weiteren Minderung der vom Wärmetauscher WT zugeführten erwärmten Luft unterbrochen wird. Dazu ist zu beachten, daß die Zusatz-Luftklappe LKZ sowohl in der in FIG 4 eingezeichneten Schließstellung 0° als auch in der durch Winkelbogen angezeigten anderen Endstellung von ca. 76° die Wärmezufuhr von der Austrittsseite des Wärmetauscher WT her verschließt.

Die Zwischen-Verweilstellung der Zusatz-Luftklappe LKZ in etwa mittlerer Öffnungs- bzw. schließstellung der ersten Luftklappe LK1 kann in konstruktiv einfacher Weise dadurch erreicht werden, daß während der Zwischen-Verweilstellung der Kulissenhebel 65 für die Zusatz-Luftklappe LKZ über einen zum Drehpunkt der Kulissenscheibe 1 zentrischen Kulissenbereich und der Kulissenhebel 3 für die erste Luftklappe LKZ über einen zum Drehpunkt der Kulissenscheibe 1 im Sinne einer weiteren Öffnung bzw. weiteren Schließung nichtzentrischen Kulissenbahnbereich geführt ist.

In einfacher Weise kann eine kundenspezifische bestimmte Temperierungscharakteristik durch eine lineare oder spezielle nichtlineare Kopplung zwischen erster Luftklappe LK1 und Zusatzklappe LK2 dadurch erreicht werden, daß lediglich z.B nur die Hebellängen und/oder die Drehpunkte der Zusatzklappenankopplung an die erste Luftklappe LK1 zu variieren sind.

Zur einfachen Justierung der von einer einzigen Kulissenscheibe 1 betätigten vier Luftklappen, insbesondere unter Berücksichtigung einer vollständigen Abdichtung in den Schließstellungen und unter Berücksichtigung von auftretenden Toleranzen aufgrund der Vielzahl der dazu zusammenzubauenden Bauteile und eines aus mehreren Teilen zusammenzusetzenden Gehäuses G, ist in den Ankopplungen zwischen der Kulissenscheibe und den Kulissenhebeln bzw. den Kulissenhebeln und den Anlenkhebeln, vorzugsweise in der Ankopplung des Anlenkhebels für die erste Luftklappe LK1 im Frischluftkanal G1 ein Excenter-Justierelement 9 zwischengeschaltet ist, das relativ zu einem Kulissenhebel 3 um eine Justierachse 94 drehverstellbar und in der Justier-Einstellung fixierbar ist und über einen zur Justierachse 94 exzentrisch versetzten Anlenkzapfen 91 an den Anlenkhebel 6 angekoppelt ist.

FIG 4 zeigt im einzelnen eine derartige vorteilhafte einfache Excenter-Justierung anhand der Ankopplung des Kulissenhebels 3 für die erste Luftklappe LK1 an den zugehörigen Anlenkhebel 6 über dessen Langlochführung 61. Dazu ist das Excenter-Justierelement 9 mit einem Justierzapfen 92 mit einer Außenzahnrasterung einerseits in einer Justieröffnung 33 mit korrespondierender Innenzahnrasterung des Kulissenhebels 3 um eine Justierachse 94 drehverstellbar und in der Justierendstellung fixierbar und andererseits über einen zu dem Justierzapfen 92 bzw. zur Justierachse 94 exzentrisch versetzten, in die Langlochführung 61 eingreifenden Anlenkzapfen 91 an den Anlenkhebel 6 angekoppelt.

Zur Einstellung des Excenter-Justierelementes 9 nach dem gesamten Zusammenbau der Heiz-und Klimaeinrichtung kann durch Einführen eines Schraubendrehers in einen Einstellschlitz 93 an der einen freien Stirnseite des Justierzapfens 92 das Excenter-Justierelement 9 unter Überwindung der Rastwiderstände in der Justieröffnung 33 des Kulissenhebels 3 verdreht werden; dadurch verändert sich der Ankoppelpunkt des Anlenkzapfens 91 in der Langlochführung 61 des Anlenkhebels 6, in dessen Folge die angekoppelte Luftklappe eine etwas geänderte Stellung gegenüber den anderen Luftklappen einnimmt. Zweckmäßigerweise weist die Justieröffnung 33 für das Excenter-Justierelement 9 im Kulissenhebel 3 einen nach außen offenen Dehnschlitz 34 und/oder einen gegenüberliegenden Dehnschlitz 35 auf, so daß einerseits zur Einstellung des Justierelementes ein elastisches Aufweiten der Einstecköffnung zum Überdrehen der Zahnrasterung möglich, jedoch andererseits Sicherheit gegen ein ungewolltes Verstellen des Justierelementes 9 bei betriebsmäßiger Mitnahmeübertragung zwischen dem Kulissenhebel 3 und dem Drehhebel 6 gewährleistet ist.

## Patentansprüche

1. Verfahren zur Frischluftsteuerung in der Mittelebene (Armaturenbrett) eines Kraftfahrzeuges über eine wasserseitig temperaturgesteuerte Heiz- und Klimaeinrichtung und eine zentrale Bedieneinheit (B) mit einem Luftverteileinstellelement, insbesondere einem Drehknopf (K) mit einer Einstellung "Fußraum" (K3), einer Einstellung "Defroster" (K2) und einer dazwischenliegenden Einstellung "Mittelebene" (K3), in der durch das Luftverteileinstellelement (Drehknopf K) eine erste Luftklappe (LK1) in einem zumindest eine Frischluftdüse (D) in der Mittelebene versorgenden Frischluft-Luftkanal (G1) betätigt wird, **dadurch gekennzeichnet,** daß von dem Luftverteileinstellelement (Drehknopf K) der zentralen Bedieneinheit (B) über die erste Luftklappe (LK1) eine mit dieser unmittelbar gekoppelte Zusatz-Luftklappe (LKZ) in einem ebenfalls die Frischluftdüse (D) versorgenden Warmluft-Zusatzkanal (G1Z) mit zumindest solchen Stellungen vorgesehen ist, daß in der Einstellung "Mittelebene" (K1) die erste Luftklappe (LK1) zur Frischluftzufuhr in Öffnungsstellung und die Zusatz-Luftklappe (LKZ) zum Wärmetauscher (WT) in Schließstellung, im Einstellbereich zwischen "Mittelebene" (K1) und "Defroster" (K2) bzw. "Fußraum" (K3) die erste Luftklappe (LK1) zur Frischluftzufuhr und die Zusatz-Luftklappe (LKZ) zum Wärmeaustauscher (WT) in Öffnungsstellung und in der Einstellung "Defroster" (K2) bzw. "Fußraum" (K3) die erste Luftklappe (LK1) zur Frischluftzufuhr und die Zusatz-Luftklappe (LKZ) zum Wärmetauscher (WT) in Schließstellung sind (Fig. 2).

2. Verfahren zur Frischluftsteuerung in der Mittelebene (Armaturenbrett) eines Kraftfahrzeuges über eine wasserseitig temperaturgesteuerte Heiz- und Klimaeinrichtung und eine zentrale Bedieneinheit (B) mit einem Luftverteileinstellelement, insbesondere einem Drehknopf (K) mit einer Einstellung "Fußraum" (K3), einer Einstellung "Defroster" (K2) und einer dazwischenliegenden Einstellung "Mittelebene" (K3), in der durch das Luftverteileinstellelement (Drehknopf K) eine erste Luftklappe (LK1) in einem zumindest eine Frischluftdüse (D) in der Mittelebene versorgenden Frischluft-Luftkanal (G1) betätigt wird, **dadurch gekennzeichnet,** daß eine von dem Luftverteileinstellelement (Drehknopf K) der zentralen Bedieneinheit (B) über die erste Luftklappe (LK1) eine mit dieser mittelbar gekoppelte Zusatz-Luftklappe (LKZ) in einem ebenfalls die Frischluftdüse (D) versorgenden Warmluft-Zusatzkanal (G1Z) mit zumindest solchen Stellungen vorgesehen ist, daß in der Einstellung "Mittelebene" (K1) die erste Luftklappe (LK1) zur Frischluftzufuhr in Öffnungsstellung und die Zusatz-Luftklappe (LKZ) zum Wärmetauscher (WT) in Schließstellung, im Einstellbereich zwischen "Mittelebene" (K1) und "Defroster" (K2) bzw. "Fußraum" (K3) die erste Luftklappe (LK1) zur Frioschluftzufuhr und die Zusatz-Luftklappe (LKZ) zum Wärmetauscher (WT) in Öffnungsstellung und in der Einstellung "Defroster" (K2) bzw. "Fußraum" (K3) die erste Luftklappe (LK1) zur Frischluftzufuhr und die Zusatz-Luftklappe (LKZ) zum Wärmetauscher (WT) in Schließstellung sind, wobei in etwa mittlerer Öffnungs- bzw. Schließstellung der ersten Luftklappe (LK1) trotz deren weiterer Öffnungs- bzw. Schließbewegung durch eine Zwischen-Verweilstellung der Zusatz-Luftklappe (LK2) ein im wesentlichen unverändert hoher Warmluftanteil beimischbar ist (Fig. 4).

3. Verfahren zur Frischluftsteuerung nach Anspruch 1 oder 2, **dadurch gekennzeichnet,** daß in der Einstellung mittig zwischen der Einstellung "Mittelebene" (K1) einerseits und der Einstellung "Defroster" (K2) bzw. "Fußraum" (K3) andererseits die erste Luftklappe (LK1) und die Zusatz-Luftklappe (LKZ) in etwa halber Öffnungsstellung sind (Bilevel-Stellung).

4. Verfahren nach Anspruch 3, **gekennzeichnet** durch eine derartige Auslegung der Luftverteilung, daß in der Bilevel-Stellung der aus der Frischluftdüse (D) austretende Luftstrom eine niedrigere Temperatur als der aus einem den Fußraum versorgenden Luftkanal (G2) austretende Luftstrom jedoch eine höhere Temperatur als in der Einstellung "Mittelebene (K1) des Luftverteileinstellelementes (Drehknopf K) aufweist.

5. Verfahren nach Anspruch 4, **gekennzeichnet** durch einen gegenüber der Mittelstellung (K1) des Luftverteilungseinstellelementes (Drehknopf K) verringerten Volumenstrom aus der Frischluftdüse (D) in der Bilevel-Stellung.

6. Verfahren nach Anspruch 4 und/oder 5, **gekennzeichnet** durch einen gegenüber der Bilevel-Stellung bei steigender Temperatur weiter sich verringernden Volumenstrom aus der Frischluftdüse (D) bei weiterem Verstellen des Luftverteileinstellelementes (Drehknopf K) von der Bilevel-Stellung in Richtung der Einstellung "Defroster" (K2) bzw. "Fußraum" (K3).

7. Einrichtung zur Durchführung des Verfahrens nach Anspruch 1 oder 2, **gekennzeichnet** durch eine durch die Zusatz-Luftklappe (LKZ) in deren Stellung "Defroster" (K2) bzw. "Fußraum" (K3) versperrbare Zusatzöffnung des Warmluft-Zusatzkanals (G1Z) zum Frischluftzutritt, derart daß in der Einstellung "Mittelebene" die Frischluft sowohl durch den Frischluft-Luftkanal (G1) als auch durch den wärmetauscherseitig durch die Zusatz-Luftklappe (LKZ) abgeschlossenen Warmluft-Zusatzkanal (G1Z) in die Mittelebene strömt.

8. Einrichtung zur Durchführung des Verfahrens nach Anspruch 1, **gekennzeichnet** durch eine von dem Luftverteileinstellelement (Drehknopf K) drehbare Kulissenscheibe (1) mit zumindest zwei in sich geschlossenen Kulissenbahnen (11,12) mit darin geführten Kulissenhebeln (3,4,5) und daran über Langlochführungen (62,72,82) gekoppelten insgesamt drei Anlenkhebeln (6,7,8), von denen der erste Anlenkhebel (6) mit der ersten Luftklappe (LK1) und der Zusatz-Luftklappe (LKZ), der zweite Anlenkhebel (7) mit der zweiten Luftklappe (LK2) und der dritte Anlenkhebel (8) mit der dritten Luftklappe (LK3) in Dreheinstellabhängigkeit stehen (Fig. 2).

9. Einrichtung nach Anspruch 8, **dadurch gekennzeichnet,** daß der erste Anlenkhebel (6) unmittelbar mit der Drehachse (61) der ersten Luftklappe (LK1) und über einen aus zumindest zwei Zusatz-Anlenkhebeln (63,64) bestehenden Kurbelantrieb mit der Drehachse (631) der Zusatz-Luftklappe (LKZ) gekoppelt ist.

10. Einrichtung nach Anspruch 8, **dadurch gekennzeichnet,** daß eine erste Kulissenbahn (11) auf der Vorderseite und eine zweite Kulissenbahn (12) auf der Rückseite der Kulissenscheibe (1) und eine der beiden Kulissenbahnen (11) sowohl zur Führung des Kulissenhebels (3) für die erste Luftklappe (LK1) als auch des Kulissenhebels (5) für die dritte Luftklappe (LK3) vorgesehen sind, wobei die Schwenkachsen der Kulissenhebel (1 bzw.3) für die erste Luftklappe (LK1) und die dritte Luftklappe (LK3) örtlich zusammenfallen.

11. Einrichtung nach Anspruch 8, **gekennzeichnet** durch eine nichtlineare Mitnahmeankopplung zwischen der ersten Luftklappe (LK1) und der Zusatz-Luftklappe (LKZ).

12. Einrichtung zur Durchführung des Verfahrens nach Anspruch 2, **gekennzeichnet** durch eine von dem Luftverteileinstellelement (Drehknopf K) drehbare Kulissenscheibe (1) mit zumindest zwei in sich geschlossenen Kulissenbahnen (11,12) mit darin geführten Kulissenhebeln (3,4,5,65) und daran über Langlochführungen (62,72,82,642) gekoppelten insgesamt drei Anlenkhebeln (6,7,8,64), von denen der erste Anlenkhebel (6) mit der ersten Luftklappe (LK1), der zweite Anlenkhebel (7) mit der zweiten Luftklappe (LK2), der dritte Anlenkhebel (8) mit der dritten Luftklappe (LK3) und der vierte Anlenkhebel (64) mit der Zusatz-Luftklappe (LK2) in Dreheinstellabhängigkeit stehen (Fig. 4).

13. Einrichtung nach Anspruch 12, **dadurch gekennzeichnet,** daß der Kulissenhebel (3) für die erste Luftklappe (LK1) über eine Koppelstange (66) mit dem Anlenkhebel (6) für die erste Luftklappe (LK1) in Mitnahmeverbindung steht.

14. Einrichtung nach Anspruch 12, **dadurch gekennzeichnet,** daß während der Zwischen-Verweilstellung der Kulissenhebel (65) für die Zusatz-Luftklappe (LK2) über einen zum Drehpunkt der Kulissenscheibe (1) zentrischen Kulissenbahnbereich und der Kulissenhebel (3) für die erste Luftklappe (LK1) über einen zum Drehpunkt der Kulissenscheibe (1) nichtzentrischen Kulissenbahnbereich geführt ist.

15. Einrichtung nach Anspruch 12, **dadurch gekennzeichnet,** daß eine erste Kulissenbahn (11) auf der Vorderseite und eine zweite Kulissenbahn (12) auf der Rückseite der Kulissenscheibe (1) und eine der beiden Kulissenbahnen (11) sowohl zur Führung des Kulissenhebels (3) für die erste Luftklappe (LK1) als auch des Kulissenhebels (4) für die zweite Luftklappe (LK2) als auch des Kulissenhebels (5) für die dritte Luftklappe (LK3) und die andere Kulissenbahn (12) zur Führung des Kulissenhebels (65) für die Zusatz-Luftklappe (LKZ) vorgesehen sind, zusammenfallen.

16. Einrichtung nach Anspruch 8 oder 12, **dadurch gekennzeichnet,** daß in zumindest einer Drehgelenk-Hebelverbindung zwischen einem Kulissenhebel und einem Anlenkhebel, insbesondere zwischen dem Kulissenhebel (3) für die erste Luftklappe (LK1) und dem an diesen mittelbar oder unmittelbar angekoppelten ersten Anlenkhebel (6) für die erste Luftklappe (LK1), ein Excenter-Justierelement (9) zwischengeschaltet ist.

17. Einrichtung nach Anspruch 16, **dadurch gekennzeichnet,** daß das Excenter-Justierelement (9) relativ zu dem Kulissenhebel um eine Justierachse (94) drehverstellbar und in der Justier-Einstellung fixierbar ist und über einen zur Justierachse (94) exzentrisch versetzten Anlenkzapfen (91) an den jeweiligen Anlenkhebel angekoppelt ist.

## Claims

1. Method for fresh air control in the central plane (instrument panel) of a motor vehicle by way of a heating and air-conditioning device, which is temperature-controlled on the water side, and a central control unit (B) with an air-distribution setting element, in particular a rotary knob (K) with a setting "foot well" (K3), a setting "defroster" (K2) and an intermediate setting "central plane" (K3) (sic), in which a first air flap (LK1) in a fresh air duct (G1) supplying at least one fresh air nozzle (D) in the central plane is actuated by the air-distribution setting element (rotary knob K), characterised in that [controlled] by the air-distribution setting element (rotary knob K) of the central control unit (B) by way of the first air flap (LK1), an additional air flap (LKZ), coupled directly with the latter, is provided in a warm air additional duct (G1Z), which likewise supplies the fresh air nozzle (D), with at least such positions that in the setting "central plane" (K1) the first air flap (LK1) for the fresh air supply is in the open position and the additional air flap (LKZ) for the heat exchanger (WT) is in the closed position, in the setting range between "central plane" (K1) and "defroster" (K2) or "foot well" (K3) respectively the first air flap (LK1) for the fresh air supply and the additional air flap (LKZ) for the heat exchanger (WT) are in the open position and in the setting "defroster" (K2) or "foot well" (K3) respectively the first air flap (LK1) for the fresh air supply and the additional air flap (LKZ) for the heat exchanger (WT) are In the closed position (Figure 2).

2. Method for fresh air control in the central plane (instrument panel) of a motor vehicle by way of a heating and air-conditioning device, which is temperature-controlled on the water side, and a central control unit (B) with an air-distribution setting element, in particular a rotary knob (K) with a setting "foot well" (K3), a setting "defroster" (K2) and an intermediate setting "central plane" (K3) (sic), in which a first air flap (LK1) in a fresh air duct (G1) supplying at least one fresh air nozzle (D) in the central plane is actuated by the air-distribution setting element (rotary knob K), characterised in that [controlled] by the air-distribution setting element (rotary knob K) of the central control unit (B) by way of the first air flap (LK1), an additional air flap (LKZ), coupled indirectly with the latter, is provided in a warm air additional duct (G1Z), which likewise supplies the fresh air nozzle (D), with at least such positions that in the setting "central plane" (K1) the first air flap (LK1) for the fresh air supply is in the open position and the additional air flap (LKZ) for the heat exchanger (WT) is in the closed position, in the setting range between "central plane" (K1) and "defroster" (K2) or "foot well" (K3) respectively the first air flap (LK1) for the fresh air supply and the additional air flap (LKZ) for the heat exchanger (WT) are in the open position and in the setting "defroster" (K2) or "foot well" (K3) respectively the first air flap (LK1) for the fresh air supply and the additional air flap (LKZ) for the heat exchanger (WT) are in the closed position, In which case In the substantially central open or closed position of the first air flap (LK1) despite the further open or closed movement as a result of an intermediate position of dwell of the additional air flap (LK2) it is possible to admix a substantially constant high proportion of warm air (Figure 4).

3. Method for fresh air control according to claim 1 or 2, characterised in that in the setting in the centre between the setting "central plane" (K1), on the one hand, and the setting "defroster" (K2) or "foot well" (K3) respectively, on the other hand, the first air flap (LK1) and the additional air flap (LKZ) are substantially in the half open position (bi-level position).

4. Method according to claim 3, characterised by such a design of the air distribution that in the bilevel position the air current emerging from the fresh air nozzle (D) has a lower temperature than the air current emerging from an air duct (G2) supplying the foot well, yet has a higher temperature than in the setting "central plane" (K1) of the air-distribution setting element (rotary knob K).

5. Method according to claim 4, characterised by a volume flow from the fresh air nozzle (D) in the bilevel position that is reduced compared with the central position (K1) of the air-distribution setting element (rotary knob K).

6. Method according to claim 4 and/or 5, characterised by a volume flow from the fresh air nozzle (D) which, when the air-distribution setting element (rotary knob K) is adjusted further from the bi-level position in the direction of the setting "defroster" (K2) or "foot well" (K3) respectively, with rising temperature is further reduced compared with the bi-level position.

7. Device for carrying out the method according to claim 1 or 2, characterised by an additional opening of the warm air additional duct (G1Z) for the admission of fresh air, which opening can be blocked by the additional air flap (LKZ) in the position of said flap "defroster" (K2) or "foot well" (K3) respectively in such a way that in the setting "central plane" the fresh air flows into the central plane both through the fresh air duct (G1) and through the warm air additional duct (G1Z) which is closed off on the heat exchanger side by the additional air flap (LKZ).

8. Device for carrying out the method according to claim 1, characterised by a link disc (1), which can be rotated by the air-distribution setting element (rotary knob K), having at least two self-contained link tracks (11, 12) with rocker levers (3, 4, 5) guided therein and, coupled thereto by way of slotted hole guides (62, 72, 82), in total three articulated levers (6, 7, 8) of which the first articulated lever (6) is in a rotary setting-dependent relationship with the first air flap (LK1) and the additional air flap (LKZ), the second articulated lever (7) is in a rotary setting-dependent relationship with the second air flap (LK2) and the third articulated lever (8) is in a rotary setting-dependent relationship with the third air flap (LK3) (Figure 2).

9. Device according to claim 8, characterised in that the first articulated lever (6) is coupled directly with the axis of rotation (61) of the first air flap (LK1) and by way of a crank drive, consisting of at least two additional articulated levers (63, 64), with the axis of rotation (631) of the additional air flap (LKZ).

10. Device according to claim 8, characterised in that a first link track (11) is provided on the front side and a second link track (12) Is provided on the rear side of the link disc (1) and one of the two link tracks (11) is provided both for the guidance of the rocker lever (3) for the first air flap (LK1) and for the guidance of the rocker lever (5) for the third air flap (LK3), with the axes of swing of the rocker levers (1 and 3 respectively) (sic) for the first air flap (LK1) and the third air flap (LK3) coinciding locally.

11. Device according to claim 8, characterised by a non-linear driving coupling between the first air flap (LK1) and the additional air flap (LKZ).

12. Device for carrying out the method according to claim 2, characterised by a link disc (1), which can be rotated by the air-distribution setting element (rotary knob K), having at least two self-contained link tracks (11, 12) with rocker levers (3, 4, 5, 65) guided therein and, coupled thereto by way of slotted guides (62, 72, 82, 642), in total three articulated levers (6, 7, 8, 64) of which the first articulated lever (6) is in a rotary setting-dependent relationship with the first air flap (LK1), the second articulated lever (7) is in a rotary setting-dependent relationship with the second air flap (LK2), the third articulated lever (8) is in a rotary setting-dependent relationship with the third air flap (LK3) and the fourth articulated lever (64) is in a rotary setting-dependent relationship with the additional air flap (LK2) (Figure 4).

13. Device according to claim 12, characterised in that the rocker lever (3) for the first air flap (LK1) is in driving engagement with the articulated lever (6) for the first air flap (LK1) by way of a coupling rod (66).

14. Device according to claim 12, characterised in that during the intermediate position of dwell the rocker lever (65) for the additional air flap (LK2) Is guided over a link track region which is concentric with the point of rotation of the link disc (1) and the rocker lever (3) for the first air flap (LK1) Is guided over a link track region which is not concentric with the point of rotation of the link disc (1).

15. Device according to claim 12, characterised in that a first link track (11) is provided on the front side and a second link track (12) is provided on the rear side of the link disc (1) and one of the two link tracks (11) both for the guidance of the rocker lever (3) for the first air flap (LK1) and for the guidance of the rocker lever (4) for the second air flap (LK2) and for the guidance of the rocker lever (5) for the third air flap (LK3) and the other link track (12) for the guidance of the rocker lever (65) for the additional air flap (LKZ) coincide.

16. Device according to claim 8 or 12, characterised in that in at least one rotary joint lever connection an eccentric adjusting element (9) is inserted between a rocker lever and an articulated lever, in particular between the rocker lever (3) for the first air flap (LK1) and the first articulated lever (6), coupled to said lever (3) directly or indirectly, for the first air flap (LK1).

17. Device according to claim 16, characterised in that the eccentric adjusting element (9) can be adjusted rotationally relative to the rocker lever about an axis of adjustment (94) and can be fixed in the adjusted setting and is coupled to the respective articulated lever by way of a link peg (91) which is offset eccentrically relative to the axis of adjustment (94).

## Revendications

1. Procédé de commande de l'air frais dans le plan médian (tableau de bord) d'un véhicule automobile au moyen d'un dispositif de chauffage et de climatisation, dont la température est commandée côté eau, et d'une unité centrale de commande (B) comportant un élément de réglage de répartition de l'air, notamment un bouton rotatif (K) comportant un réglage "espace au niveau des pieds" (K3), un réglage "dégivreur" (K2) et un réglage intermédiaire "plan médian" (K3), dans lequel un premier volet de guidage d'air (LK1) placé dans un canal de circulation d'air frais (G1) alimentant au moins une buse d'air frais (D) dans le plan médian est actionné grâce à l'élément de réglage de la répartition de l'air (bouton rotatif K), caractérisé par le fait que dans l'élément de réglage de répartition d'air (bouton rotatif K) de l'unité de commande centrale (B) il est prévu, au-dessus du premier volet de guidage d'air (LK1), un volet supplémentaire de guidage d'air (LKZ), qui est accouplé directement au premier volet, dans un canal supplémentaire de circulation d'air chaud (G1Z) qui alimente également la buse d'air frais (D) et possède au moins deux positions telles que, dans la position "plan médian" (K1), le premier volet de guidage d'air (LK1) est situé dans la position ouverte pour amener de l'air frais et que le volet supplémentaire de guidage d'air (LKZ) est dans la position bloquant la circulation en direction de l'échangeur de chaleur (WT), et que dans la gamme de réglage entre "plan médian" (K1) et "dégivreur" (K2) ou "espace au niveau des pieds" (K3), le premier volet de guidage d'air (L4) sert à réaliser l'envoi d'air frais et le volet supplémentaire de guidage d'air (LKZ) est dans la position ouverte en direction de l'échangeur de chaleur (WT), et, dans la position "dégivreur" (K2) ou "espace au niveau des pieds" (K3), le premier volet de guidage d'air (LK1) sert à envoyer l'air frais et le volet supplémentaire de guidage d'air (LKZ) est dans la position bloquant la circulation en direction de l'échangeur de chaleur (WT) (figure 2).

2. Procédé de commande de l'air frais dans le plan médian (tableau de bord) d'un véhicule automobile au moyen d'un dispositif de chauffage et de climatisation, dont la température est commandée côté eau, et d'une unité centrale de commande (B) comportant un élément de réglage de répartition de l'air, notamment un bouton rotatif (K) comportant un réglage "espace au niveau des pieds" (K3), un réglage "dégivreur" (K2) et un réglage intermédiaire "plan médian" (K3), dans lequel un premier volet de guidage d'air (LK1) placé dans un canal de circulation d'air frais (G1) alimentant au moins une buse d'air frais (D) dans le plan médian est actionné grâce à l'élément de réglage de la répartition de l'air (bouton rotatif K), caractérisé par le fait que dans l'élément de réglage de répartition d'air (bouton rotatif K) de l'unité de commande centrale (B) il est prévu, au-dessus du premier volet de guidage d'air (LK1), un volet supplémentaire de guidage d'air (LKZ), qui est accouplé directement au premier volet, dans un canal supplémentaire de circulation d'air chaud (G1Z) qui alimente également la buse d'air frais (D) et possède au moins deux positions telles que, dans la position "plan médian" (K1), le premier volet de guidage d'air (LK1) est situé dans la position ouverte pour amener de l'air frais et que le volet supplémentaire de guidage d'air (LKZ) est dans la position bloquant la circulation en direction de l'échangeur de chaleur (WT), et que dans la gamme de réglage entre "plan médian" (K1) et "dégivreur" (K2) ou "espace au niveau des pieds" (K3), le premier volet de guidage d'air (L4) sert à réaliser l'envoi d'air frais et le volet supplémentaire de guidage d'air (LKZ) est dans la position ouverte en direction de l'échangeur de chaleur (WT), et, dans la position "dégivreur" (K2) ou "espace au niveau des pieds" (K3), le premier volet de guidage d'air (LK1) sert à envoyer l'air frais et le volet supplémentaire de guidage d'air (LKZ) est dans la position bloquant la circulation en direction de l'échangeur de chaleur (WT), auquel cas lorsque le premier volet de guidage d'air (LK1) est dans une position par exemple centrale d'ouverture ou de fermeture, en dépit de la poursuite de son déplacement d'ouverture et de fermeture, une grande proportion sensiblement inchangée d'air chaud peut être introduite dans le mélange au moyen d'un réglage temporaire du volet supplémentaire de guidage d'air (LK2) (figure 4).

3. Procédé de réglage de l'air frais suivant la revendication 1 ou 2, caractérisé par le fait que dans le réglage centré entre le réglage "plan médian" (K1) d'une part et le réglage "dégivreur" K2 ou "espace au niveau des pieds" (K3) d'autre part, le premier volet de guidage d'air (LK1) et le volet supplémentaire de guidage d'air (LKZ) sont situés dans une position approximativement à demi-ouverte (position bilevel).

4. Procédé suivant la revendication 3, caractérisé par une conception telle de la répartition de l'air que dans la position bilevel, le courant d'air sortant de la buse d'air frais (D) possède une température inférieure à celle du courant d'air sortant d'un canal de circulation d'air (G2) alimentant l'espace situé au niveau des pieds, mais une température supérieure à celle obtenue dans le réglage "plan médian" (K1) de l'élément de réglage de répartition d'air (bouton rotatif K).

5. Procédé suivant la revendication 4, caractérisé par le fait que dans la position bilevel, le courant volumique sortant de la buse d'air frais (D) est plus faible que lorsque l'élément de réglage de répartition de l'air (bouton rotatif K) est dans la position médiane (K1).

6. Procédé suivant la revendication 4 et/ou 5, caractérisé par le fait que le courant volumique sortant de la buse d'air frais (D) continue à diminuer par rapport au réglage bilevel lorsque la température augmente, dans le cas de la poursuite du déplacement de l'élément de réglage de la distribution d'air (bouton rotatif K) depuis la position bilevel en direction de la position finale "dégivreur" (K2) ou "espace au niveau des pieds" (K3).

7. Dispositif pour la mise en oeuvre du procédé suivant la revendication 1 ou 2, caractérisé par une ouverture supplémentaire du canal supplémentaire de circulation d'air chaud (G1Z), qui peut être bloqué par le volet supplémentaire de guidage d'air (LKZ) dans sa position "dégivreur" (K2) ou "espace au niveau des pieds" (K3), pour l'accès d'air frais de sorte que dans le réglage "plan médian", l'air frais pénètre dans le plan médian aussi bien par le canal de circulation d'air frais (G1) que par le canal supplémentaire de circulation d'air chaud (G1Z), qui est fermé, du côté de l'échangeur de chaleur, par le volet supplémentaire de guidage d'air (LKZ).

8. Dispositif pour la mise en oeuvre du procédé suivant la revendication 1, caractérisé par un disque de coulisse (1), qui peut être entraîné en rotation par l'élément de réglage de distribution d'air (bouton rotatif K), avec au moins deux coulisses (11,12) refermées sur elles-mêmes, dans lesquelles sont guidées des leviers de coulisse (3,4,5), et un ensemble de trois leviers articulés (6,7,8), qui sont couplés aux leviers de coulisse par l'intermédiaire de guides en forme de trous allongés (62,72,82), et parmi lesquels le premier levier articulé (6) est associé au premier volet de guidage d'air (LK1) et au volet supplémentaire de guidage d'air (LKZ) en fonction du réglage en rotation, que le second levier articulé (7) est relié au second volet de guidage d'air (LK2) en fonction du réglage en rotation et que le troisième levier articulé (8) est relié au troisième volet de guidage d'air (LK3) en fonction du réglage en rotation (figure 2).

9. Dispositif suivant la revendication 8, caractérisé par le fait que le premier levier articulé (6) est accouplé directement à l'axe de rotation (61) du premier volet de guidage d'air (LK1) et, par l'intermédiaire d'un dispositif d'entraînement à manivelle constitué par au moins deux leviers articulés supplémentaires (63,64), à l'axe de rotation (631) du volet supplémentaire de guidage d'air (LKZ).

10. Dispositif suivant la revendication 8, caractérisé par le fait qu'une première coulisse (11) est prévue sur la face avant et une seconde coulisse (12) sur la face arrière du disque à coulisse (1) et que l'une des deux coulisses (11) est prévue aussi bien pour le guidage du levier de coulisse (3) pour le premier volet de guidage d'air (LK1) que pour le guidage du levier de coulisse (5) pour le troisième volet de guidage (LK3), les axes de pivotement des leviers de coulisse (1 ou 3) pour le premier volet de guidage d'air (LK1) et le troisième volet de guidage (LK3) coïncident localement.

11. Dispositif suivant la revendication 8, caractérisé par un accouplement d'entraînement non linéaire entre le premier volet de guidage d'air (LK1) et le volet supplémentaire de guidage d'air (LKZ).

12. Dispositif pour la mise en oeuvre du procédé suivant la revendication 2, caractérisé par un disque de coulisse (1), qui peut être entraîné en rotation par l'élément de réglage de répartition d'air (bouton rotatif K), avec au moins deux coulisses (11,12) refermées sur elles-mêmes, dans lesquelles sont guidées des leviers de coulisse (3,4,5,65), et un ensemble de trois leviers articulés (6,7,8,64), qui sont couplés aux leviers de coulisse par l'intermédiaire de guides en forme de trous allongés (62,72,82,642), et parmi lesquels le premier levier articulé (6) est associé au premier volet de guidage d'air (LK1) en fonction du réglage en rotation, que le second levier articulé (7) est relié au second volet de guidage d'air (LK2) en fonction du réglage en rotation et que le troisième levier articulé (8) et le quatrième levier articulé (64) est relié au volet supplémentaire de guidage d'air (LK3) en fonction du réglage en rotation (figure 4).

13. Dispositif suivant la revendication 12, caractérisé par le fait que le levier de coulisse (3) pour le premier volet de guidage d'air (LK1) est raccordé selon une liaison motrice par l'intermédiaire d'une barre de couplage (66) au levier articulé (6) pour le premier volet de guidage d'air (LK1).

14. Dispositif suivant la revendication 12, caractérisé par le fait que dans la position intermédiaire temporaire, le levier de coulisse (65) pour le levier supplémentaire de guidage d'air (LK2) est guidé par une zone de coulisse centrée sur le centre de rotation du disque à coulisses (1) et que le levier de coulisse (3) pour le premier volet de guidage d'air (LK1) est guidé par une zone de coulisse non centrée sur le centre de rotation du disque à coulisses (1).

15. Dispositif suivant la revendication 12, caractérisé par le fait qu'il est prévu une première coulisse (11) située sur la face avant et une seconde coulisse (12) située sur la face arrière du disque à coulisses (1) et l'une des deux coulisses (11) coïncident aussi bien pour le guidage du levier de coulisse (3) pour le premier volet de guidage d'air (LK1) que pour le guidage du levier de coulisse (4) pour le second volet de guidage (LK2) que pour le guidage du levier de coulisse (5) pour le troisième volet de guidage d'air (LK3), et que l'autre coulisse (12) pour le guidage du levier de coulisse (65) pour le volet supplémentaire de guidage d'air (LKZ).

16. Dispositif suivant la revendication 8 ou 12, caractérisé par le fait qu'un élément d'ajustement à excentrique (9) est intercalé dans au moins une transmission à leviers articulés rotatifs entre un levier de coulisse et un levier articulé, notamment entre le levier de coulisse (3) pour le premier volet de guidage d'air (LK1) et le premier levier articulé (6) accouplé directement ou indirectement au levier précédent, pour le premier volet de guidage d'air (LK1).

17. Dispositif suivant la revendication 16, caractérisé par le fait que l'élément d'ajustement à excentrique (9) peut être réglé en rotation par rapport au levier de coulisse, autour d'un axe d'ajustement (94) et peut être fixé dans la position de réglage d'ajustement et est accouplé au levier articulé respectif par l'intermédiaire d'un tourillon d'articulation (91) décalé d'une manière excentrée par rapport à l'axe d'ajustement (94).
